# EUROPEAN PATENT APPLICATION

(11) **EP 1 873 109 A1**
(43) Date of publication of application: **02.01.2008**
(21) Application number: 05730672.2
(22) Date of filing: 18.04.2005
(51) Int. Cl.: B66B 7/00

(54) **HEAT DIFFUSION DEVICE FOR ELEVATOR HOISTWAY**

(71) Applicant: MITSUBISHI DENKI KABUSHIKI KAISHA, Chiyoda-ku, Tokyo 100-8310 (JP)
(72) Inventor: MORITA, Susumu, Mitsubishi Denki Kabushiki Kaisha, Tokyo 1008310 (JP); SUGIYAMA, Yoshiki, c/o Mitsubishi Denki K. K., Tokyo 1008310 (JP); HAYASHI, Yuichiro, c/o Mitsubishi Denki K. K., Tokyo 1008310 (JP)
(74) Representative: HOFFMANN EITLE
(86) International application number: PCT/JP2005/007401
(87) International publication number: WO 2006/114856

(57) **Abstract**

A cooling unit has high installation costs and running costs because of its complicated equipment and high electric power consumption. To solve this problem, there is provided a thermal diffusion system for an elevator shaft, in which the equipment is simple and the electric power consumption is low, so that the installation costs and running costs are low.

In a machine room-less elevator in which a drive unit 4 and a control unit 6 are provided in an upper part of a shaft 1, the thermal diffusion system for an elevator shaft includes a blower 7 provided in an upper part of the shaft; an air intake duct 8 whose air inlet at one end is arranged near the control unit or the drive unit and the other end of which is attached to the intake side of the blower; and an exhaust air duct 9 one end of which is attached to the exhaust side of the blower and whose air outlet on the other end is arranged so that air is exhausted downward in the shaft.

## Description

### Technical Field

The present invention relates to a thermal diffusion system for a shaft of a machine room-less elevator, in which a drive unit and a control unit are provided in an upper part of the shaft. More particularly, it relates to the prevention of the rise in temperature in the vicinity of the control unit and the drive unit and the ventilation in the upper part of the shaft.

### Background Art

Conventionally, an air conditioner for elevator, which is provided with a cooling unit for supplying cold air, is configured so that the cooling unit is provided in a machine room in an upper part of a shaft, a duct for guiding cold air blown out of the cooling unit is provided between the machine room and the interior of the shaft, and a ventilating fan, which sucks air in the shaft from upside and blows it off downward, is provided at a predetermined height position in the shaft. By the cooling unit provided in the machine room, air is taken in from the interior of the shaft via an air intake duct, and cold air is blown off vertically downward in the shaft via an air outlet of a blowoff duct, and falls in the shaft. The air containing this cold air is sucked by the ventilating fan from the upside via an air inlet at the predetermined height position in the shaft, and blown off further downward via an air outlet to cool the interior of the shaft (for example, refer to Patent Document 1).

[Patent Document 1]: Japanese Patent Laid-Open No. 5-193863

### Disclosure of the Invention

### Problems to be Solved by the Invention

However, the conventional air conditioner for elevator as described above has a problem in that a cooling unit is needed and the equipment is complicated, and also the electric power consumption is high, so that the installation costs and running costs are high.

The present invention has been made to solve the above problem, and accordingly an object thereof is to provide a thermal diffusion system for an elevator shaft, in which the equipment is simple and the electric power consumption is low, so that the installation costs and running costs are low.

### Means for Solving the Problems

The present invention provides a thermal diffusion system for an elevator shaft, characterized in that in a machine room-less elevator having a shaft; a car and a counter weight which are connected to each other via a rope disposed in the shaft and run in the shaft in the direction opposite to each other; a drive unit for driving the car and the counter weight, which is provided in an upper part of the shaft and around which the rope is set; and a control unit for controlling the drive unit, which is provided in an upper part of the shaft, the thermal diffusion system includes a blower provided in an upper part of the shaft; an air intake duct whose air inlet at one end is arranged near the control unit or the drive unit and the other end of which is attached to the intake side of the blower; and an exhaust air duct one end of which is attached to the exhaust side of the blower and whose air outlet on the other end is arranged so that air is exhausted downward in the shaft.

Also, the air outlet of the exhaust air duct is arranged at a position lower than the ceiling of the car stopping on the highest floor.

Also, the length of the exhaust air duct is extended so that the air outlet is arranged at a position lower than the ceiling of the car stopping on the highest stop floor in the elevation range in which the car is usually often used.

Also, the blower is arranged in a corner portion in an upper part of the shaft.

Also, the blower is arranged at a position overlapping with the car in plan view and above the car.

Further, the air intake duct is branched into a fork shape and has two air inlets, and one air inlet is arranged near the control unit and the other air inlet is arranged near the drive unit.

### Advantages of the Invention

According to the present invention, there is offered an advantage that heat dissipated from the control unit and the drive unit is absorbed efficiently, thereby preventing the rise in temperature in the vicinity of these pieces of equipment, and the heat in an upper part of the shaft is allowed to escape downward and is diffused.

### Brief Description of the Drawings

Figure 1 is a longitudinal sectional view of a thermal diffusion system for an elevator shaft in accordance with embodiment 1 of the present invention;
Figure 2 is a plan view of a thermal diffusion system for an elevator shaft in accordance with embodiment 1 of the present invention;
Figure 3 is a longitudinal sectional view of a thermal diffusion system for an elevator shaft in accordance with embodiment 2 of the present invention;
Figure 4 is a plan view of a thermal diffusion system for an elevator shaft in accordance with embodiment 2 of the present invention;
Figure 5 is a longitudinal sectional view of a thermal diffusion system for an elevator shaft in accordance with embodiment 3 of the present invention;
Figure 6 is a plan view of a thermal diffusion system for an elevator shaft in accordance with embodiment 3 of the present invention;
Figure 7 is a longitudinal sectional view of a thermal diffusion system for an elevator shaft in accordance with embodiment 4 of the present invention; and
Figure 8 is a plan view of a thermal diffusion system for an elevator shaft in accordance with embodiment 4 of the present invention.

### Description of Symbols

- 1: shaft
- 2: car
- 3: counter weight
- 4: drive unit
- 5: rope
- 6: control unit
- 7: blower
- 8: air intake duct
- 9: exhaust air duct
- 10: air intake duct
- 11: branch-type air intake duct
- 12: extension duct
- 13: blower

### Best Mode for Carrying Out the Invention

The present invention will now be described in more detail with reference to the accompanying drawings.

### Embodiment 1

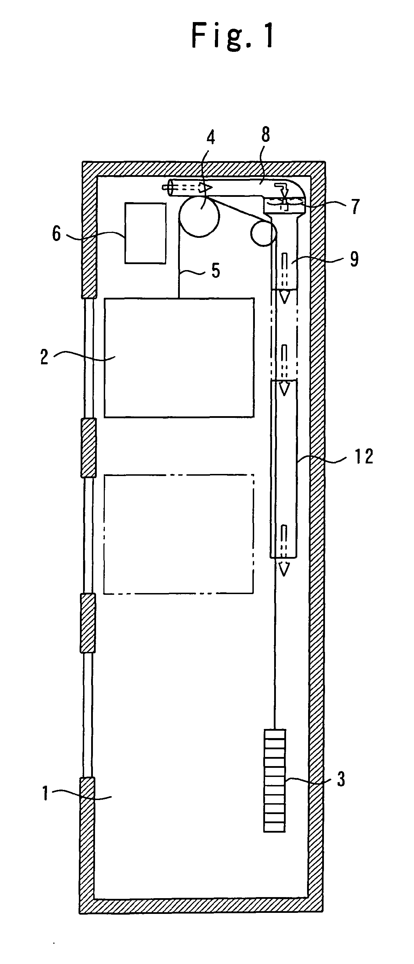

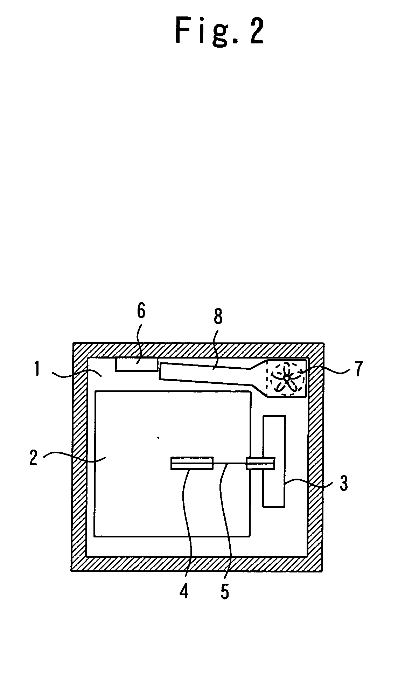

Figures 1 and 2 are a longitudinal sectional view and a plan view, respectively, showing a thermal diffusion system for an elevator shaft in accordance with embodiment 1 of the present invention. An elevator system of this invention, which is what is called a machine room-less elevator, includes a car 2 of the elevator, which runs along a guide rail in a shaft 1; a counter weight 3 that runs along another guide rail in the shaft in the direction opposite to the car 1; a drive unit 4 disposed in an upper part of the shaft 1; a rope 5 set around the drive unit 4 so as to connect with the car 2 and the counter weight 3 at both ends; and a control unit 6 that is disposed on one-side wall in an upper part of the shaft 1 to control the drive unit 4. That is to say, the drive unit 4 and the control unit 6, which are easily heated by dissipated heat, are disposed in the upper part of the shaft 1.
In a corner portion in an upper part of the shaft 1, a blower 7, whose rotation axis is disposed vertically, is provided. This blower 1 includes an air intake duct 8, whose air inlet at one end is arranged near a portion above the control unit 6 and the other end of which is attached to the intake side of the blower 7, and an exhaust air duct 9, one end of which is attached to the exhaust side of the blower 7 and whose air outlet at the other end is arranged so that air is exhausted downward in the shaft 1. Also, to the air outlet at the other end of the exhaust air duct 9, an extension duct 12 is connected as necessary.

In the thermal diffusion system for an elevator shaft configured as described above, heat dissipated from the control unit 6 is sucked through the air inlet at one end of the air intake duct 8 by the blowing action of the blower 7, being sent to the exhaust air duct 9, and is discharged to a portion below the uppermost stop position of the car 2 in the shaft 1. Therefore, air is stirred by the downward operation of the car 2, by which heat is diffused to a lower part of the shaft 1. Further, the length of the exhaust air duct 9 is extended so that the air outlet is arranged at a position lower than the ceiling of the car 2 stopping on the highest floor, by which air is sent to under the car 2. Therefore, a large amount of air is further pushed down to a lower part of the shaft by the downward operation of the car 2, so that heat is efficiently diffused to a lower part of the shaft.
Also, in the case where the car 2 stops less frequently on the highest floor, the extension duct 12 is connected to the other end of the exhaust air duct 9, by which the air outlet is arranged at a position lower than the ceiling of the car 2 stopping on the highest stop floor in the elevation range in which the car 2 is usually often used. Thereby, air is sent to under the car 2. Therefore, a large amount of air is further pushed down to a lower part of the shaft by the downward operation of the car 2, so that heat is diffused efficiently to a lower part of the shaft.
In an upper part of the shaft 1, a temperature sensor (not shown) is provided so that when the temperature increases to a preset value, the blower 7 is operated.

According to the above-described configuration, there is offered an advantage that heat dissipated from the control unit and the drive unit is absorbed efficiently, thereby preventing the rise in temperature in the vicinity of these pieces of equipment, and the heat in an upper part of the shaft is allowed to escape downward and is diffused.

### Embodiment 2

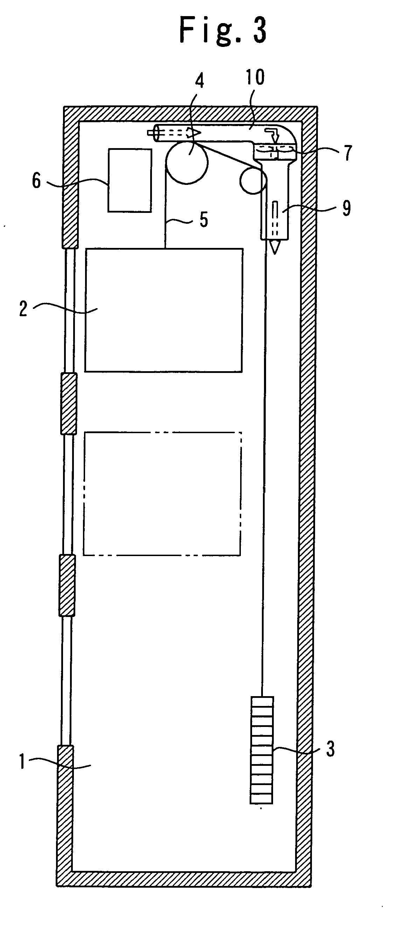

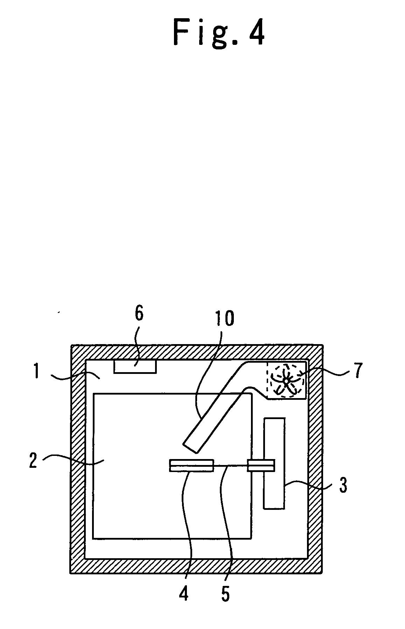

Figures 3 and 4 are a longitudinal sectional view and a plan view, respectively, showing a thermal diffusion system for an elevator shaft in accordance with embodiment 2 of the present invention.
In the above-described embodiment 1, the air inlet at one end of the air intake duct 8 attached to the intake side of the blower 1 is arranged near a portion above the control unit 6. By contrast, in embodiment 2, an air inlet at one end of an air intake duct 10 attached to the intake side of the blower 7 is arranged near the drive unit 4. Other configurations are the same as those of embodiment 1.

In the thermal diffusion system for an elevator shaft configured as described above, heat dissipated from the drive unit 4 is sucked through the air inlet at one end of the air intake duct 10 by the blowing action of the blower 7, being sent to the exhaust air duct 9, and is discharged to a portion below the uppermost stop position of the car 2 in the shaft 1. Therefore, air is stirred by the downward operation of the car 2, by which heat is diffused to a lower part of the shaft 1.

### Embodiment 3

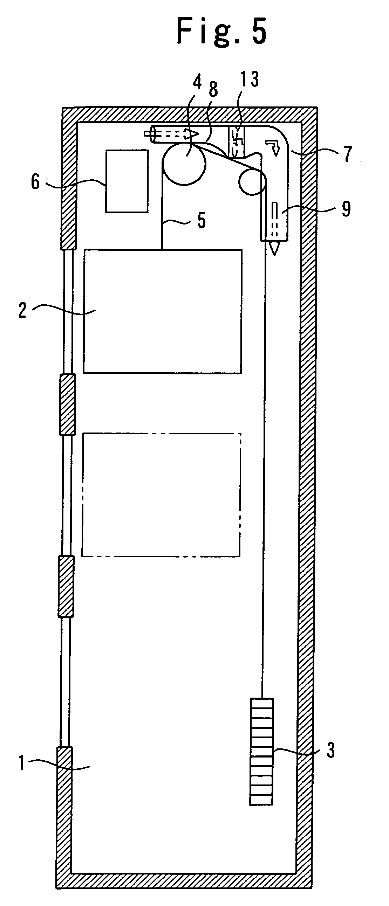

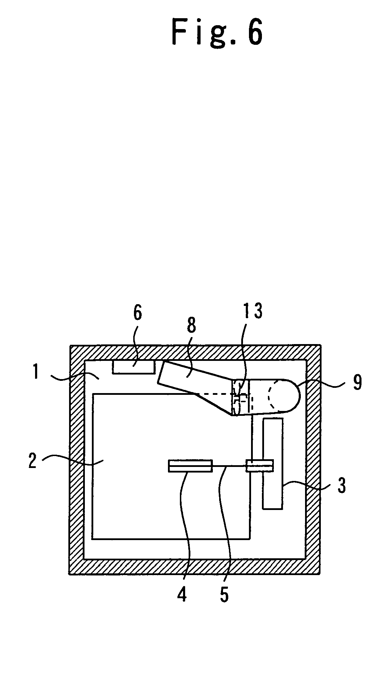

Figures 5 and 6 are a longitudinal sectional view and a plan view, respectively, showing a thermal diffusion system for an elevator shaft in accordance with embodiment 3 of the present invention.
In the above-described embodiment 1, the blower 7, whose rotation axis is disposed vertically, is provided in a corner portion in an upper part of the shaft 1. By contrast, in embodiment 3, a blower 13, whose rotation axis is disposed horizontally, is arranged at a position overlapping with the car 2 in plan view and above the car 2. Other configurations are almost the same as those of embodiment 1.

In the thermal diffusion system for an elevator shaft configured as described above, a maintenance worker can gain access to the blower 13 from the top of the car 2, so that he/she can perform maintenance work of the blower easily on the top of the car.

### Embodiment 4

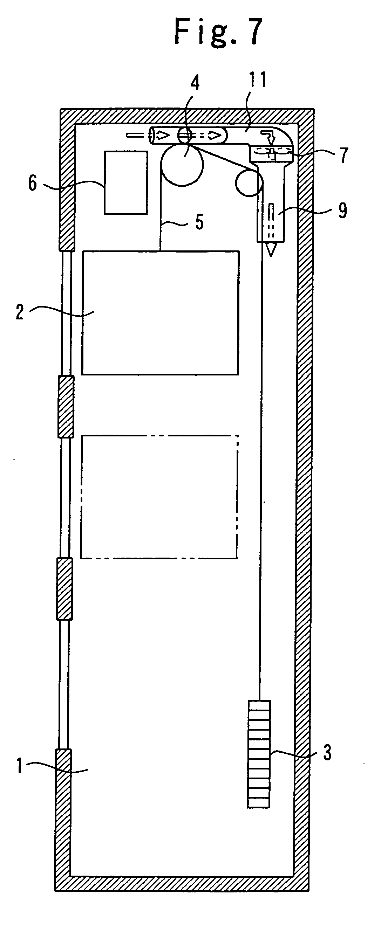

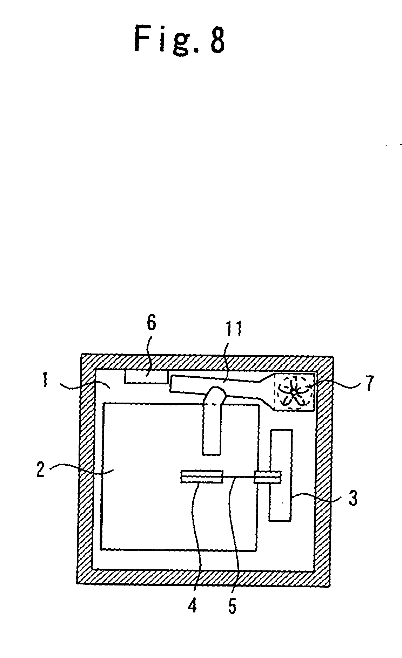

Figures 7 and 8 are a longitudinal sectional view and a plan view, respectively, showing a thermal diffusion system for an elevator shaft in accordance with embodiment 4 of the present invention.
In the above-described embodiment 1, the air inlet at one end of the air intake duct 8 attached to the intake side of the blower 1 is arranged near a portion above the control unit 6, and in embodiment 2, the air inlet at one end of the air intake duct 10 attached to the intake side of the blower 7 is arranged near the drive unit 4. By contrast, in embodiment 4, a branch-type air intake duct 11 which is attached to the intake side of the blower 7 and is branched into a fork shape is provided so that one air inlet of this branch-type air intake duct 11 is arranged near the control unit 6 and the other air inlet thereof is arranged near the drive unit 4. Other configurations are almost the same as those of embodiment 1.

In the thermal diffusion system for an elevator shaft configured as described above, heat dissipated from the control unit 6 and the drive unit 4 is sucked through the two branched air inlets of the branch-type air intake duct 11 by the blowing action of the blower 7, being sent to the exhaust air duct 9, and is discharged to a portion below the uppermost stop position of the car 2 in the shaft 1. Therefore, air is stirred by the downward operation of the car 2, by which heat is diffused to a lower part of the shaft 1. Industrial Applicability

As described above, the thermal diffusion system for an elevator shaft in accordance with the present invention can be configured so that, in a machine room-less elevator in which a drive unit and a control unit are provided in an upper part of the shaft, heat dissipated from the control unit and the drive unit is absorbed efficiently, thereby preventing the rise in temperature in the vicinity of these pieces of equipment, and the heat in an upper part of the shaft can be allowed to escape downward and can be diffused.

## Claims

1. A thermal diffusion system for an elevator shaft, **characterized in that**
in a machine room-less elevator having a shaft; a car and a counter weight which are connected to each other via a rope disposed in the shaft and run in the shaft in the direction opposite to each other; a drive unit for driving the car and the counter weight, which is provided in an upper part of the shaft and around which the rope is set; and a control unit for controlling the drive unit, which is provided in an upper part of the shaft, the thermal diffusion system comprises:
a blower provided in an upper part of the shaft;
an air intake duct whose air inlet at one end is arranged near the control unit or the drive unit and the other end of which is attached to the intake side of the blower; and
an exhaust air duct one end of which is attached to the exhaust side of the blower and whose air outlet on the other end is arranged so that air is exhausted downward in the shaft.

2. The thermal diffusion system for an elevator shaft according to claim 1, **characterized in that** the air outlet of the exhaust air duct is arranged at a position lower than the ceiling of the car stopping on the highest floor.

3. The thermal diffusion system for an elevator shaft according to claim 1, **characterized in that** the length of the exhaust air duct is extended so that the air outlet is arranged at a position lower than the ceiling of the car stopping on the highest stop floor in the elevation range in which the car is usually often used.

4. The thermal diffusion system for an elevator shaft according to any one of claims 1 to 3, **characterized in that** the blower is arranged in a corner portion in an upper part of the shaft.

5. The thermal diffusion system for an elevator shaft according to any one of claims 1 to 3, **characterized in that** the blower is arranged at a position overlapping with the car in plan view and above the car.

6. The thermal diffusion system for an elevator shaft according to any one of claims 1 to 5, **characterized in that** the air intake duct is branched into a fork shape and has two air inlets, and one air inlet is arranged near the control unit and the other air inlet is arranged near the drive unit.
